Europäisches Patentamt

(19) European Patent Office

Office européen des brevets

(11) Publication number: **0 209 296**
**B1**

(12) # EUROPEAN PATENT SPECIFICATION

(45) Date of publication of the patent specification:
27.09.89

(51) Int. Cl.⁴: **B60R 1/06**

(21) Application number: **86305120.7**

(22) Date of filing: **01.07.86**

(54) Exterior rear-View Mirror.

(30) Priority: **13.07.85 GB 8517753**
**21.11.85 GB 8528680**

(43) Date of publication of application:
**21.01.87 Bulletin 87/4**

(45) Publication of the grant of the patent:
**27.09.89 Bulletin 89/39**

(84) Designated Contracting States:
**DE FR GB IT**

(56) References cited:
**DE-A- 2 721 004**
**FR-A- 2 307 677**

(73) Proprietor: **BRITAX (WINGARD) LIMITED, Chandler Road, Chichester West Sussex PO19 2UG(GB)**

(72) Inventor: **Whitehead, Peter John, 35 Southbourne Avenue, Emsworth Hants(GB)**
Inventor: **Bottrill, John, 9 Langdale Avenue, Chichester West Sussex(GB)**

(74) Representative: **Hollinghurst, Antony, Britax Limited Patent Department, Chichester West Sussex PO19 2AQ(GB)**

## Description

This invention relates to an exterior rear-view mirror for a vehicle comprising a housing pivotally mounted on the base member for angular movement about a first pivot axis, a reflective member pivotally mounted in the housing for angular movement relative thereto about a second pivot axis, and control means operable from within the vehicle for varying the orientation of the reflective member relative to the base member both about a first pivot axis and about a second pivot axis perpendicular to the first pivot axis. A rear-view mirror of this type is disclosed in FR-A 2 307 677.

In FR-A 2 307 677, the control means comprises a control lever operable from within the vehicle to vary the orientation of the reflective member relative to the base member both about a first pivot axis and about a second pivot axis perpendicular to the first pivot axis.

According to one aspect of the invention, the lever is coupled to the housing at a location offset from the first axis by first coupling means, and to the reflective member at a location offset from both said second axis and said third axis by second coupling means.

The third axis is preferably the longitudinal axis of the lever, so that the first axis is perpendicular thereto. with this arrangement, the mechanical advantage obtained from the length of the lever is available to effect angular movement of the housing about the first pivot axis against, whatever frictional or other force is necessary to resist the forces imposed on the housing by wind resistance. Angular movement of the lever about the third axis varies the orientation of the reflective member within the housing about the second axis. This requires relatively little force because the frictional or other retention force keeping the reflective member at its set position within the housing can be chosen to be relatively small.

In order to facilitate angular movement of the lever about its own axis, a cranked end portion may be formed on its free end. Alternatively, an operating knob may be mounted on its free end. The free end of the lever projects through the base member so as to extend into the interior of the vehicle when the base member is secured to the side of the body thereof.

The first coupling means is preferably connected to the housing by a clutch arrangement which permits angular movement of the housing relative to the control lever when a predetermined force is exceeded. This allows the housing to fold flat against the side of the vehicle on which the mirror is mounted in the event of impact on the housing from the front or from the rear.

The second coupling means may comprise a finger fast with the lever and projecting laterally therefrom into a slot in a member secured to the reflective member, thus permitting angular movement of the lever about its third axis to cause angular movement of the reflective member about the second axis in the event that the second and third axes are not mutually parallel.

According to another aspect of the invention, the control means comprises eletrically powered drive means mounted in the housing and having an output arranged to cause angular movement of the reflective member relative to the housing about the second axis.

The drive means may also have a second output arranged to cause movement of the housing relative to the base member about the first axis. Preferably the second output is arranged in driving engagement with a pinion mounted for angular movement about the first axis and coupled to the base member.

Alternatively, the control means may include second drive means mounted in the base member and arranged to cause angular movement of the housing relative to the base member about the first axis. The second drive means may be arranged to drive a pinion mounted for angular movement about the first axis and coupled to the housing.

In either case, the pinion may be coupled to the member which it is to drive by clutch means which allows the housing to fold flat against the side of the vehicle on which the mirror is mounted in the event of impact on the housing from the front or from the rear.

Embodiments of the invention will now be described, by way of example, with reference to the accompanying drawings, in which:

Figure 1 is a partially broken away elevational view of a rear-view mirror in accordance with one embodiment of the invention from the side of the housing on which the reflective member is exposed;

Figure 2 is a cross-sectional view taken on the line 2 - 2 in Figure 1;

Figure 3 is a cross-sectional view taken on the line 3 - 3 in Figure 1;

Figure 4 is an exploded view of the components of the first and second coupling means;

Figure 5 is a partially broken away elevational view, similar to Figure 1, of a rear-view mirror in accordance with a second embodiment of the invention; and

Figure 6 is a cross-sectional view taken on the line 6 - 6 in Figure 5.

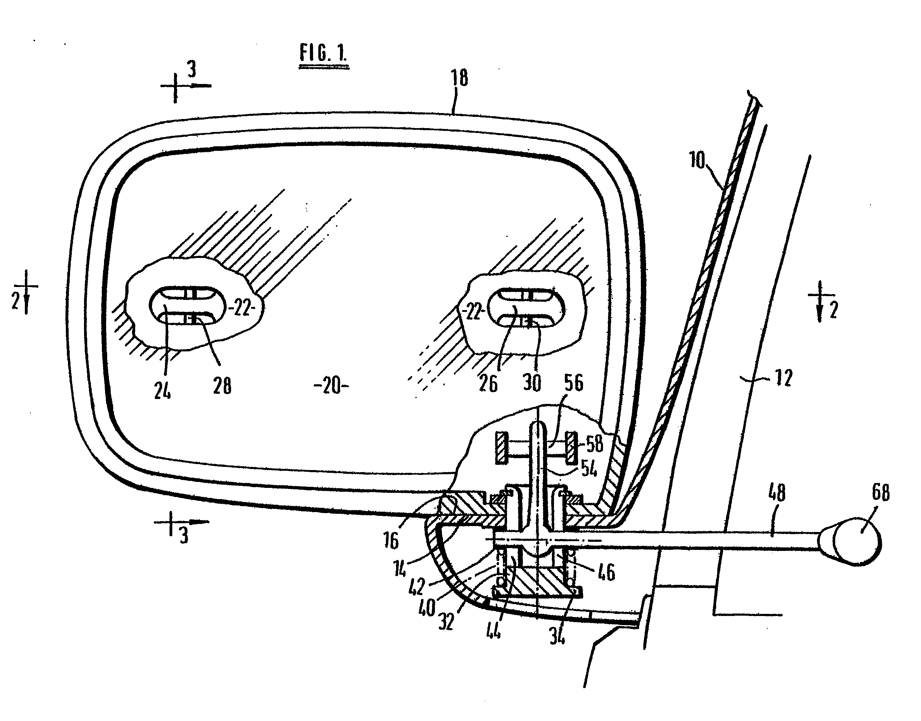

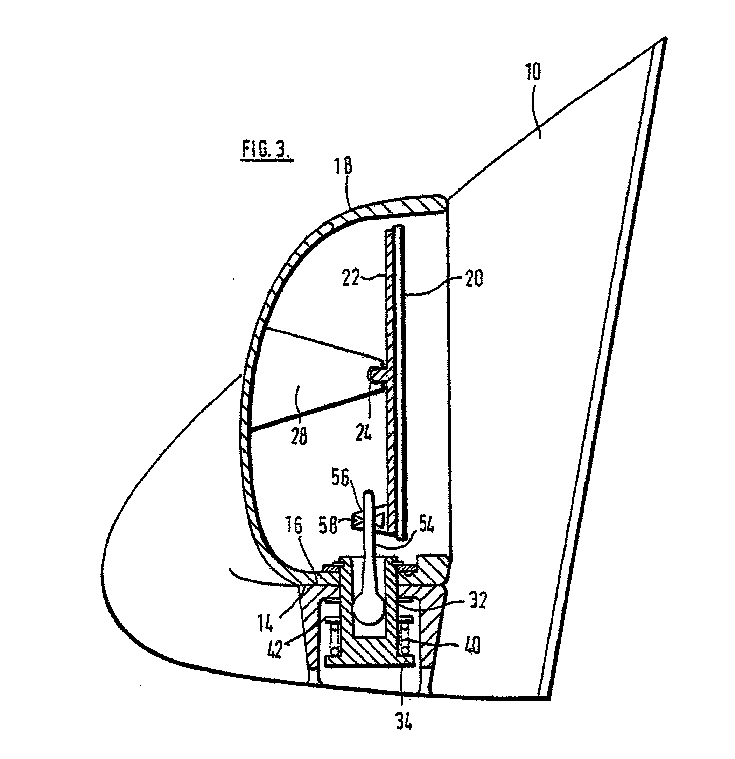

As illustrated in Figures 1 to 3, a rear-view mirror has a base member 10 mounted on the body 12 of a vehicle. The base member 10 has a projecting portion with a flat upper wall 14 which abuts against a flat lower wall 16 of a mirror housing 18.

Within the housing 18, a reflective member 20 is secured to a mirror carrier 22 having co-axial cylindrical formations 24 and 26 which are a snap fit in complementary recesses in respective ribs 28 and 30 which project from the inner wall of the housing 18 towards the mirror carrier 22. The mirror carrier 22 is thus free to pivot about the axis of the cylindrical formations 24 and 26 which, in use, is arranged to be generally horizontal.

As can be seen from Figures 1, 3 and 4, the housing 18 is connected to the base member 10 by a hollow cylindrical coupling member 32 which has a flange 34 on its lower end. The coupling member 32 extends through aligned holes in the abutting faces 14 and 16 on the base member 10 and housing 18 respectively. A circlip 36 on the upper end of the coupling member 32 maintains a washer 38 in abutment with the inside surface of the housing 18 and a compression spring 40, acting between the flange 34 and a washer 42, presses the abutting walls 14 and 16 into engagement with each other.

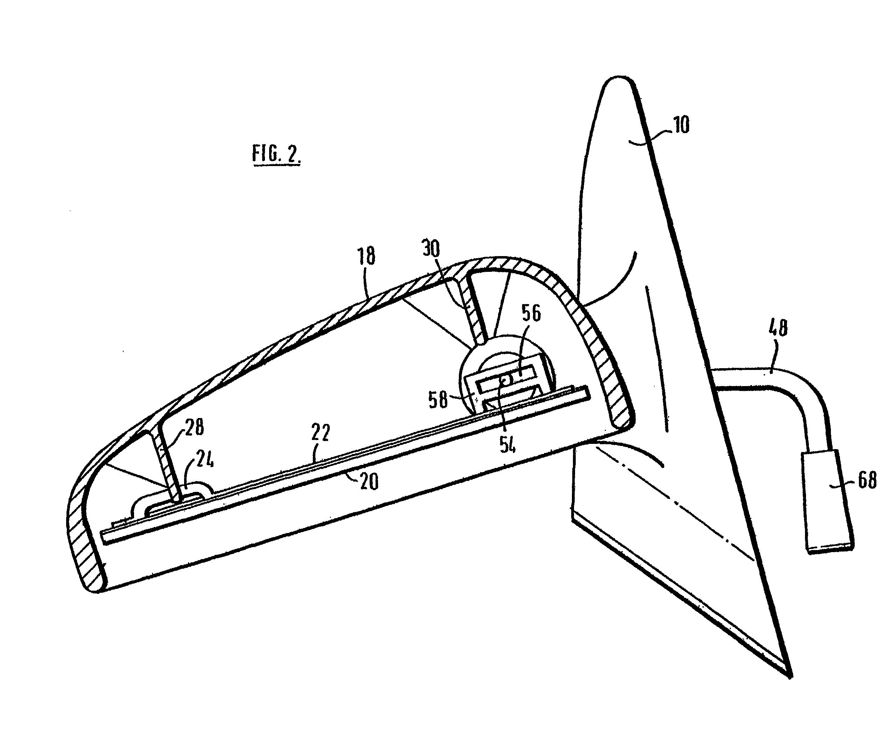

The coupling member 32 has two diametrically opposed, vertically extending slots 44 and 46. An operating lever 48 projects through the slots 44 and 46 and between the washer 42 and a further washer 50 which abuts against the wall 14 of the base member 10. The lever 48 passes through a spherical formation 52, to which it is rigidly secured and which is a loose fit within the cylindrical interior of the coupling member 32. A finger 54 projects upwardly from the spherical formation 52 beyond the top of the coupling member and into engagement with a slot 56 in a member 58 secured to the back of the mirror carrier 22 (see also Figure 2).

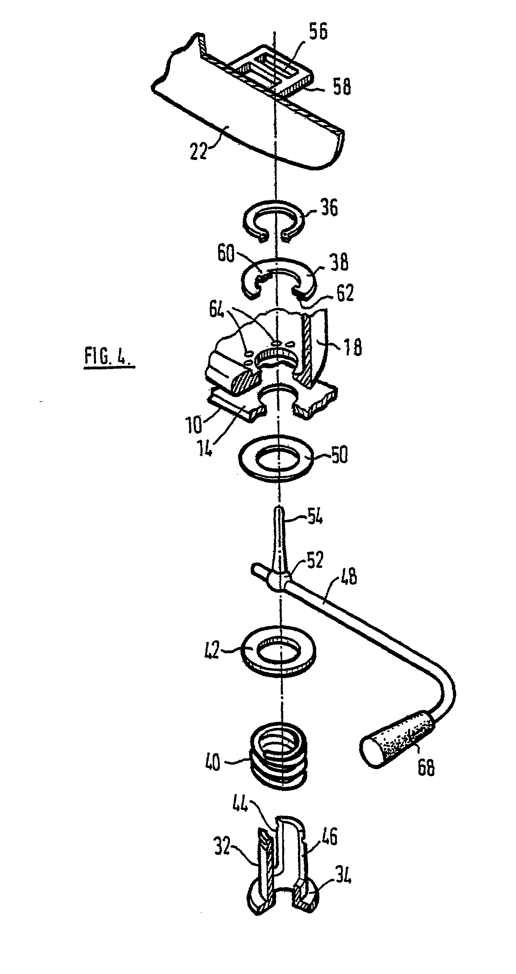

As can be seen from Figure 4, the washer 38 has a radially inwardly extending projection 60, which engages in the slot 44 in the coupling member 32, and at least one downwardly extending projection 62, which engages in one of a set of complementary recesses 64 in the wall 16 of the housing 12. This maintains the housing 12 at a fixed orientation relative to the coupling member 32 unless sufficient force is applied to dislodge the projection 62 from its recess 64.

The end of the lever 48 opposite to that which projects through the spherical formation 52 is bent approximately at right angles to the rest of the lever and carries an operating knob 68 which is, in use, accessible from the interior of the vehicle.

In order to adjust the orientation of the mirror in the horizontal direction, the lever 48 is pivoted about the axis of the coupling member 32. This movement is transmitted to the coupling member 32 by engagement of the lever 48 in the slots 44 and 46 and thence, via the washer 38, to the housing 18. The housing 18 thus pivots about the axis of the coupling member 32 simultaneously with the lever 48, the mechanical advantage obtained by the length of such lever being available to overcome the friction between the abutting faces of the walls 14 and 16.

In order to adjust the orientation of the mirror in the vertical direction, the knob 58 is moved upwardly or downwardly, thus pivoting the lever 48 about the end thereof which projects between the two washers 42 and 50. The resulting movement of the finger 54 is transmitted by the edges of the slot 56 to the mirror carrier 22 which therefore pivots about the common axis of its two cylindrical formations 24 and 26. The slot 56 permits this movement to take place without any risk of jamming even when the lever 48 is not parallel to the cylindrical formations 24 and 26, as illustrated in Figure 2. Although the leverage which can be exerted to effect this movement is little more than that provided by the length of the knob 68, the frictional forces to be overcome are merely those between the rod 48 on the one hand and the washers 42 and 50 on the other, a very small frictional force being sufficient to hold the mirror carrier 22 in its set position within the housing 18.

If the housing is subject to an impact, from the front or from the rear, which would displace it beyond the range of movement of the lever 48, the detent formations on the washer 38 disengage from the recesses on the housing 18, freeing the latter to pivot about the axis of the coupling member 32 to bring the housing into abutment with the adjacent side of the vehicle 12.

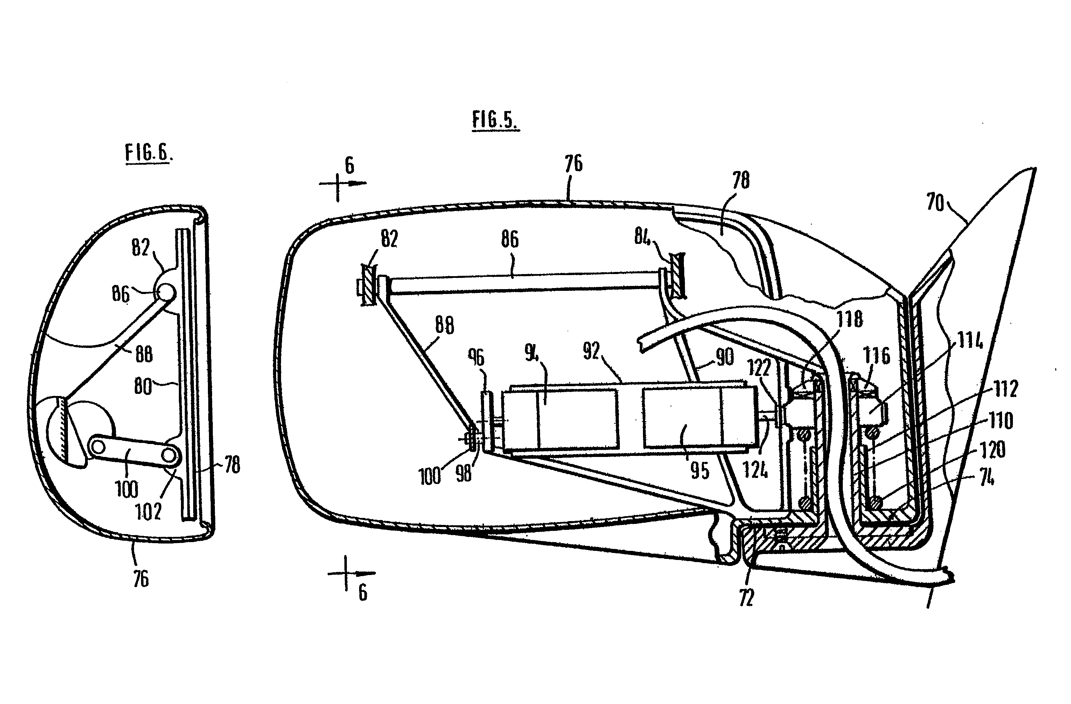

Figures 5 and 6 illustrate an alternative rearview mirror which is arranged to be electrically operated. The mirror has a base member 70 adapted to be mounted on the body of a vehicle. The base member 70 is similar to the base member 10 of Figures 1 to 4 in that it has a flat upper wall 72 which abuts against a flat lower wall of a mirror housing 76.

Within the housing 76, a reflective member 78 is secured to a mirror carrier 80 with integrally formed rearwardly extending brackets 82 and 84 which are journalled on a shaft 86. The shaft 86 is mounted on ribs 88 and 90 which are formed integrally with the housing 76.

A carrier member 92 extends between the ribs 88 and 90 and has two electric motors 94 and 95 mounted thereon. The motor 94 is arranged to drive a disc 96 having a stud axle 98 eccentrically mounted thereon. The stub axle 98 is coupled by a connecting rod 100 to a bracket 102 formed integrally with the mirror carrier 80 at a location spaced from the shaft 86. Thus, angular movement of the disc 96 causes adjustment of the orientation of the reflective member 78 about the shaft 86.

The base member 70 has a flanged hollow cylindrical stud 110 secured by its flange to the flat upper wall 72 so as to project through an opening in the flat lower wall 74 of the housing 76. A cylindrical wall 112, formed integrally with the housing 76, surrounds the stud 110 so as to form a pivot bearing. A pinion 114 is journalled on the stud 110 above the cylindrical wall 112. The upper face of the pinion 114 carries detent formations 116 which are adapted to engage with complementary formations on a cap 118 which is rotationally fast with the stud 110. A compression spring 120 urges the detent formations 116 and the complementary formations into engagement with one another. The pinion 114 is drivingly engaged by a worm 122 secured to the output shaft 124 of the second motor 95. Thus, rotation of the shaft 124 causes angular movement of the housing 76 relative to the base member 70.

If the housing 76 is subject to impact from the front or rear, the detent formations 116 disengage from the complementary formations on the cap 118, allowing the housing 76 to fold backwards or forwards against the side of a vehicle on which the mirror is mounted.

The motor 95 may also be operable to drive the mirror to a parked position folded against the side of the vehicle or to return the mirror to the normal position from the parked position or after deflection by impact upon the housing 76.

## Claims

1. An exterior rear-view mirror for a vehicle comprising a housing (18, 76) pivotally mounted on the base member (10, 70) for angular movement about a first pivot axis (32, 110), a reflective member (20, 78) pivotally mounted in the housing (18, 76) for angular movement relative thereto about a second pivot axis (24, 86), and a control lever (48) pivotally mounted on the base member (10) for angular movement both about said first axis (32) and about a third axis (48) extending in a direction which is perpendicular to said first axis (32) and which has a component parallel to said second axis (24, 86), the control lever (48, 92) being operable from within the vehicle to vary the orientation of the reflective member (20, 78) relative to the base member (10, 70) both about a first pivot axis (32, 110) and about a second pivot axis (24, 86) perpendicular to the first pivot axis (32, 110), characterised by first coupling means coupling the lever (48) to the housing (18, 76) at a location offset from the first axis (32) and second coupling means for coupling the lever (48) to the reflective member (20) at a location offset from both said second axis (24) and said third axis (48).

2. A rear-view mirror according to claim 1, characterised in that the third axis is the longitudinal axis of the lever (48).

3. A rear-view mirror according to claim 1 or 2, characterised in that the lever (48) has a cranked end portion (68) formed on its free end.

4. A rear-view mirror according to claim 1 or 2, characterised in that an operating knob is mounted on the free end of the lever (48).

5. A rear-view mirror according to any of claims 1 to 4, characterised in that the first coupling means is connected to the housing (18, 76) by a clutch arrangement which permits angular movement of the housing (18, 76) relative to the control lever (48) when a predetermined force is exceeded.

6. A rear-view mirror according to any of claims 1 to 5, characterised in that the second coupling means comprises a finger fast with the lever (48) and projecting laterally therefrom into a slot (56) in a member (58) secured to the reflective member (20).

7. An exterior rear-view mirror for a vehicle comprising a housing (18, 76) pivotally mounted on the base member (10, 70) for angular movement about a first pivot axis (32, 110), a reflective member (20, 78) pivotally mounted in the housing (18, 76) for angular movement relative thereto about a second pivot axis (24, 86), and control means (48, 92) operable from within the vehicle for varying the orientation of the reflective member (20, 78) relative to the base member (10, 70) both about a first pivot axis (32, 110) and about a second pivot axis (24, 86) perpendicular to the first pivot axis (32, 110), characterised in that the control means (92) comprises electrically powered drive means (94, 95) mounted in the housing (76) and having an output (96) arranged to cause angular movement of the reflective member (78) relative to the housing (76) about the second axis (24, 86).

8. A rear-view mirror according to claim 7, characterised in that the drive means (94, 95) has a second output (124) arranged to cause movement of the housing (76) relative to the base member (70) about the first axis (110).

9. A rear-view mirror according to claim 8, characterised in that the second output (124) is in driving engagement with a pinion (114) mounted for angular movement about the first axis (110) and coupled to the base member (70).

10. A rear-view mirror according to claim 8, characterised in that the control means includes second drive means mounted in the base member (70) and arranged to cause angular movement of the housing (76) relative to the base member (70) about the first axis (110).

11. A rear-view mirror according to claim 10, characterised in that the second drive means is arranged to drive a pinion mounted for angular movement about the first axis (110) and coupled to the housing (76).

12. A rear-view mirror according to claim 7 to 11, characterised in that the pinion is coupled to the member which it is to drive by clutch means which allows the housing (18, 76) to fold flat against the side of the vehicle on which the mirror is mounted in the event of impact on the housing (18, 76) from the front or from the rear.

## Patentansprüche

1. Außenrückblickspiegel für ein Fahrzeug mit einem Gehäuse (18, 76), das schwenkbar auf dem Basisteil (10, 70) zur Winkelbewegung um eine erste Schwenkachse (32, 110) montiert ist, einem spiegelnden Bauteil (20, 78), das schwenkbar in dem Gehäuse (18, 76) zur dazu relativen Winkelbewegung um eine zweite Schwenkachse (24, 86) montiert ist, und einem Stellhebel (48), der schwenkbar auf dem Basisteil (10) montiert ist zur Winkelbewegung sowohl um die erste Achse (32) als auch um eine dritte Achse (48), die sich in einer zur ersten Achse (32) senkrechten Richtung ausdehnt und die eine zur zweiten Achse (24, 86) parallele Komponente aufweist, wobei der Stellhebel (48, 92) vom Inneren des Fahrzeuges bedienbar ist, um die Ausrichtung des spiegelnden Bauteils (20, 78) relativ zum Basisteil (10, 70) sowohl um eine erste Schwenkachse (32, 110) als auch um eine zur ersten Schwenkachse (32, 110) senkrechte zweite Schwenkachse (24, 86) zu verändern, gekennzeichnet durch eine erste Verbindungseinrichtung, die den Hebel (48) mit dem Gehäuse (18, 76) an einer gegenüber der ersten Achse (32) versetzten Stelle verbindet, und eine zweite Verbindungseinrichtung zur Verbindung des Hebels (48) mit dem spiegelnden Bauteil (20) an einer Stelle, die sowohl gegenüber der zweiten Achse (24) als auch der dritten Achse (48) versetzt ist.

2. Rückblickspiegel nach Anspruch 1, dadurch gekennzeichnet, daß die dritte Achse der Längsachse des Hebels (48) entspricht.

3. Rückblickspiegel nach Anspruch 1 oder 2, dadurch gekennzeichnet, daß der Hebel (48) einen gekröpften Endabschnitt (68) aufweist, der an seinem freien Ende gebildet ist.

4. Rückblickspiegel nach Anspruch 1 oder 2, dadurch gekennzeichnet, daß ein Bedienungsknopf an dem freien Ende des Hebels (48) montiert ist.

5. Rückblickspiegel nach einem der Ansprüche 1 bis 4, dadurch gekennzeichnet, daß die erste Verbindungseinrichtung mit dem Gehäuse (18, 76) durch eine Kupplungsanordnung verbunden ist, die eine Winkelbewegung des Gehäuses (18, 76) relativ zum Steuerhebel (48) zuläßt, wenn eine vorbestimmte Kraft überschritten wird.

6. Rückblickspiegel nach einem der Ansprüche 1 bis 5, dadurch gekennzeichnet, daß die zweite Verbindungseinrichtung einen Finger umfaßt, der fest mit dem Hebel (48) verbunden ist und seitlich davon in einen Schlitz (56) in einem Bauteil (58), das an dem spiegelnden Bauteil (20) befestigt ist, hineinragt.

7. Außenrückblickspiegel für ein Fahrzeug mit einem Gehäuse (18, 76), das schwenkbar auf dem Basisteil (10, 70) zur Winkelbewegung um eine erste Schwenkachse (32, 110) montiert ist, einem spiegelnden Bauteil (20, 78), das schwenkbar in dem Gehäuse (18, 76) zur dazu relativen Winkelbewegung um eine zweite Schwenkachse (24, 86) montiert ist, und einer Steuereinrichtung (48, 92), die vom Inneren des Fahrzeuges bedienbar ist zur Veränderung der Ausrichtung des spiegelnden Bauteils (20, 78) relativ zum Basisteil (10, 70) sowohl um eine erste Schwenkachse (32, 110) als auch um eine zur ersten Schwenkachse (32, 110) senkrechte zweite Schwenkachse (24, 86), dadurch gekennzeichnet, daß die Steuereinrichtung (92) eine elektrisch betriebene Antriebseinrichtung (94, 95) umfaßt, die in dem Gehäuse (76) montiert ist und einen Ausgang (96) aufweist, der so angeordnet ist, daß er eine Winkelbewegung des spiegelnden Bauteils (78) relativ zum Gehäuse (76) um die zweite Achse (24, 86) verursacht.

8. Rückblickspiegel nach Anspruch 7, dadurch gekennzeichnet, daß die Antriebseinrichtung (94, 95) einen zweiten Ausgang (124) aufweist, der angeordnet ist eine Bewegung des Gehäuses (76) relativ zum Basisteil (70) um die erste Achse (110) zu verursachen.

9. Rückblickspiegel nach Anspruch 8, dadurch gekennzeichnet, daß der zweite Ausgang (124) in antreibenden Eingriff steht mit einem Kleinrad (114), das zur Winkelbewegung um die erste Achse (110) montiert ist und mit dem Basisteil (70) verbunden ist.

10. Rückblickspiegel nach Anspruch 8, dadurch gekennzeichnet, daß die Steuereinrichtung eine zweite Antriebseinrichtung einschließt, die in dem Basisteil (70) montiert ist und angeordnet ist eine Winkelbewegung des Gehäuses (76) relativ zum Basisteil (70) um eine erste Achse (110) zu verursachen.

11. Rückblickspiegel nach Anspruch 10, dadurch gekennzeichnet, daß die zweite Antriebseinrichtung angeordnet ist, ein Kleinrad, das zur Winkelbewegung um die erste Achse (110) montiert ist und mit dem Gehäuse (76) verbunden ist, anzutreiben.

12. Rückblickspiegel nach Anspruch 7 bis 11, dadurch gekennzeichnet, daß das Kleinrad mit dem Bauteil, welches es antreibt, durch eine Kupplungseinrichtung verbunden ist, wodurch dem Gehäuse (18, 76) gestattet ist, flach gegen die Fahrzeugseite auf welcher der Spiegel montiert ist zu klappen, im Falle eines Stoßes gegen das Gehäuse (18, 76) von der Vorderseite oder von der Rückseite.

## Revendications

1. Un rétroviseur extérieur pour un véhicule, comprenant un boîtier (18, 76) à montage pivotant sur l'élément de base (10, 70) pour effectuer un mouvement angulaire autour d'un premier axe de pivot (32, 110), un élément réflecteur (20, 78) à montage pivotant dans le boîtier (18, 76), pour effectuer un mouvement angulaire par rapport à celui-ci autour d'un second axe de pivot (24, 86) et un levier de commande (48) à montage pivotant sur l'élément de base (10), pour effectuer un mouvement angulaire, à la fois autour dudit premier axe (32) et autour d'un troisième axe (48) s'étendant dans une direction perpendiculaire audit premier axe (32) et qui possède une composante parallèle audit second axe (24, 86), le levier de commande (48, 92) étant manœuvrable de l'intérieur du véhicule pour faire varier l'orientation de l'élément réflecteur (20, 78) par rapport à l'élément de base (10, 70), à la fois autour d'un premier axe de pivot (32, 110) et autour d'un second axe de pivot (24, 86) perpendiculaire au premier axe de pivot (32, 110), caractérisé par un premier moyen d'accouplement reliant le levier (48) au boîtier (18, 76) en un emplacement décalé du premier axe (32) et un second moyen d'accouplement pour relier le levier (48) à l'élément réflecteur (20) en un emplacement décalé par rapport à la fois audit second axe (24) et audit troisième axe (48).

2. Un rétroviseur selon la revendication 1, caractérisé en ce que le troisième axe est l'axe longitudinal du levier (48).

3. Un rétroviseur selon la revendication 1 ou 2, caractérisé en ce que le levier (48) possède une partie d'extrémité coudée (68) formée sur son extrémité libre.

4. Un rétroviseur selon la revendication 1 ou 2, caractérisé en ce qu'un bouton de monœuvre est monté sur l'extrémité libre du levier (48).

5. Un rétroviseur selon l'une quelconque des revendications 1 à 4, caractérisé en ce que le premier moyen d'accouplement est relié au boîtier (18, 76) par un dispositif d'embrayage qui permet un mouvement angulaire du boîtier (18, 76) par rapport au levier de commande (48) lorsqu'une force prédéterminée est dépassée.

6. Un rétroviseur selon l'une quelconque des revendications 1 à 4, caractérisé en ce que le second moyen d'accouplement comprend un doigt rigide avec le levier (48) et faisant saillie latéralement de celui-ci, dans une fente (56) dans un élément (58) fixé sur l'élément réflecteur (20).

7. Un rétroviseur extérieur pour un véhicule, comprenant un boîtier (18, 76) à montage pivotant sur l'élément de base (10, 70) pour effectuer un mouvement angulaire autour d'un premier axe de pivot (32, 110), un élément réflecteur (20, 78) à montage pivotant dans le boîtier (18, 76) pour effectuer un mouvement angulaire par rapport à celui-ci autour d'un second axe de pivot (24, 86) et des moyens de commande (48, 92) monœuvrable de l'intérieur du véhicule, pour varier l'orientation de l'élément réflecteur (20, 78) par rapport à l'élément de base (10, 70), tous deux autour d'un premier axe de pivot (32, 110) et autour d'un second axe de pivot (24, 86) perpendiculaire au premier axe de pivot (32, 110), caractérisé en ce que les moyens de commande (92) comprennent des moyens d'entraînement mûs électriquement (94, 95) montés dans le boîtier (76) et comportant une sortie (96) ménagée pour provoquer un mouvement angulaire de l'élément réflecteur (78) par rapport au boîtier (76) autour du second axe (24, 86).

8. Un rétroviseur selon la revendication 6, caractérisé en ce que les moyens d'entraînement (94, 95) comprennent une seconde sortie (124) agencée pour provoquer un mouvement du boîtier (76) par rapport à l'élément de base (70) autour du premier axe (110).

9. Un rétroviseur selon la revendication 7, caractérisé en ce que la seconde sortie (124) est à engagement en prise avec un pignon (114) monté pour effectuer un mouvement angulaire autour du premier axe (110) et accouplé à l'élément de base (70).

10. Un rétroviseur selon la revendication 8, caractérisé en ce que les moyens de commande comprennent un second moyen d'entraînement monté dans l'élément de base (70) et agencé pour provoquer un mouvement angulaire du boîtier (76) par rapport à l'élément de base (70) autour du premier axe (110).

11. Un rétroviseur selon la revendication 10, caractérisé en ce que le second moyen d'entraînement est agencé pour entraîner un pignon monté pour effectuer un mouvement angulaire autour d'un premier axe (110) et accouplé en boîtier (76).

12. Un rétroviseur selon l'une quelconque des revendications 6, 7, 8 ou 9, caractérisé en ce que le pignon est accouplé à l'élément devant être entraîné par les moyens en forme d'embrayage, permettant au boîtier (18, 76) de se rabattre à plat contre le côté du véhicule sur lequel le miroir est monté, en cas de choc sur le boîtier (18, 76) venant de l'avant ou de l'arrière.

FIG. 1

FIG. 2.

EP 0 209 296 B1

FIG. 3.

FIG. 4.

FIG.6.

FIG.5.

EP 0 209 296 B1